# EUROPÄISCHE PATENTSCHRIFT

(11) **EP 3 486 388 B1**
(45) Veröffentlichungstag und Bekanntmachung des Hinweises auf die Patenterteilung: **22.01.2020**
(21) Anmeldenummer: 18205913.9
(22) Anmeldetag: 13.11.2018
(51) Int. Cl.: E04B 1/26, E04B 1/38, F16B 5/02, G10K 11/172, E04B 1/84, E04B 1/82

(54) **VERBINDUNGSVORRICHTUNG ZUM VERBINDEN ZWEIER BAUTEILE UND BAUTEILANORDNUNG MIT EINER SOLCHEN VERBINDUNGSEINRICHTUNG**
CONNECTING DEVICE FOR CONNECTING TWO COMPONENTS AND COMPONENT ASSEMBLY WITH SUCH A CONNECTING DEVICE
DISPOSITIF DE RACCORDEMENT PERMETTANT DE RACCORDER DEUX COMPOSANTS ET AGENCEMENT DE COMPOSANT DOTÉ D'UN TEL DISPOSITIF DE RACCORDEMENT

(30) Priorität: 15.11.2017 DE 202017106943 U
(43) Veröffentlichungstag der Anmeldung: 22.05.2019
(73) Patentinhaber: Pitzl Metallbau GmbH & Co. KG, 84051 Altheim (DE)
(72) Erfinder: PITZL, Thomas, 84051 Essenbach (DE)
(74) Vertreter: Hofstetter, Schurack & Partner

(56) Entgegenhaltungen:
- EP-A2- 2 022 902
- DE-U1- 29 610 381
- US-A1- 2017 058 505

## Beschreibung

Die Erfindung betrifft eine Verbindungsvorrichtung zum Verbinden zweier Bauteile, insbesondere einer Holzkonstruktion, der im Oberbegriff des Patentanspruchs 1 angegebenen Art. Ferner betrifft die Erfindung eine Bauteilanordnung mit einer solchen Verbindungseinrichtung gemäß dem Patentanspruch 9.

Derartige Holzkonstruktionen kommen beispielsweise beim Gebäudebau zum Einsatz. Insbesondere bei Gebäuden, in welchen Menschen wohnen und/oder arbeiten, sind besonders strenge Schallschutzvorschriften einzuhalten. So schlägt beispielsweise die AT 508174 B1 2011-07-15 eine Verbindungseinrichtung vor, zum miteinander Verbinden von zumindest zwei Bauteilen, insbesondere Boden- oder Wand- oder Deckenelementen, einer Holzkonstruktion, insbesondere eines Holzhauses, mit zumindest einem Bolzen und einem ersten Befestigungselement zum Befestigen des Bolzens an einem der Bauteile und einem zweiten Befestigungselement zur Befestigung des Bolzens an einem anderen der Bauteile, wobei der Bolzen die Befestigungselemente miteinander verbindet und auf einer Seite zumindest eines der Befestigungselemente zumindest eine Zwischenlage aus schwingungsdämpfenden Material angeordnet ist, wobei zusätzlich auch der Bolzen zumindest bereichsweise mit zumindest einer weiteren Zwischenlage aus schwingungsdämpfenden Material ummantelt ist.

Ferner offenbart die EP 2 022 902 A2 eine Verbindungsvorrichtung mit den Merkmalen des Oberbegriffes des Anspruchs 1, d.h. einen zwei Schenkel aufweisenden Winkelverbinder, wobei an wenigstens einem der Schenkel eine Zwischenschicht aus einem schalldämmenden und/oder schwingungsisolierenden Material angeordnet ist.

Hierbei stehen die bei diesen herkömmlichen Verbindungseinrichtungen zum Einsatz kommenden Bolzen lediglich senkrecht zu einer zwischen den zu verbindenden Bauteilen angeordneten Verbindungsebene, sodass diese herkömmlichen Verbindungseinrichtungen nur in besonders geringem Maße dazu geeignet sind, eine auf die beiden verbundenen Bauteile wirkende Scherbelastung aufzunehmen. Gleiches gilt für eine winkelförmige Verbindungsvorrichtung, wie sie aus dem Bereich des Holzbaus bekannt ist.

Eine derartige Verbindungsvorrichtung zum Verbinden zweier Bauteile weist einen ersten Schenkel auf, der mit einem ersten der beiden Bauteile verbindbar ist, indem je ein Verbindungselement durch je eines von den ersten Schenkel durchdringenden Löchern hindurch in das erste Bauteil eintreibbar ist. Des Weiteren weist diese Verbindungsvorrichtung einen in einem Winkel zu dem ersten Schenkel angeordneten, zweiten Schenkel auf, der mittels eines weiteren Verbindungselements mit einem zweiten der beiden Bauteile verbindbar ist. Ferner umfasst diese Verbindungsvorrichtung eine Auflageplatte, deren Auflageseite einer Innenfläche des ersten Schenkels zugewandt ist und deren Montageseite von dieser Innenfläche abgewandt ist, wobei die Auflageplatte Löcher aufweist, die jeweils die Auflageplatte vollständig durchdringen und die mit den Löchern des ersten Schenkels korrespondieren, sodass das jeweilige Verbindungselement durch das eine der Löcher des ersten Schenkels und das jeweilige, damit korrespondierende Loch der Auflageplatte hindurchtreibbar ist.

Aufgabe der vorliegenden Erfindung ist es, eine schadensfreie Energiedissipation bei einer auf eine Bauteilanordnung wirkenden Belastung auf besonders vorteilhafte Art und Weise zu gewährleisten.

Diese Aufgabe wird durch eine Verbindungsvorrichtung mit den Merkmalen des Patentanspruchs 1 und durch eine Bauteilanordnung mit den Merkmalen des Patentanspruchs 9 gelöst. Vorteilhafte Ausgestaltungen mit zweckmäßigen Weiterbildungen der Erfindung sind in den übrigen Patentansprüchen angegeben.

Um also die genannte Aufgabe zu lösen, ist es erfindungsgemäß vorgesehen, dass zumindest zwei der Löcher der Auflageplatte in Bezug zu dem ersten Schenkel schräg und in Bezug zu dem zweiten Schenkel parallel und bezüglich einer Spiegelebene, die senkrecht zu dem ersten und zu dem zweiten Schenkel steht, spiegelbildlich zueinander verlaufen. Hierdurch lassen sich zumindest zwei Verbindungselemente, welche beispielsweise als jeweils eine Schraube ausgebildet sein können, schräg in das erste der beiden Bauteile eintreiben, sodass diese Verbindungselemente aufgrund deren schräger Lage bei einer Scherungsbeanspruchung, welche zwischen dem ersten Schenkel und dem ersten Bauteil wirkt, in einem höheren Maße auf Druck bzw. Zug belastet werden, als senkrecht durch die Auflageplatte bzw. den ersten Schenkel hindurchverlaufende Verbindungselemente. Mit wieder anderen Worten bedeutet das, dass die Verbindungsvorrichtung mittels der zwei schräg verlaufenden Verbindungselemente in besonders hohem Maße geeignet ist, die Scherbelastung bzw. -beanspruchung aufzunehmen, ohne dass die schräg verlaufenden Verbindungselemente zerstört werden, zum Beispiel reißen oder brechen etc. Insbesondere wenn der zweite Schenkel mit dem zweiten Bauteil mittels des weiteren Verbindungselements verbunden ist, ist die erfindungsgemäße Verbindungsvorrichtung dementsprechend geeignet, eine Scherbelastung zwischen dem ersten Bauteil und dem zweiten Bauteil besonders vorteilhaft aufzunehmen. Hierdurch ist es beispielsweise bei einer zumindest zwei Bauteile aufweisenden Konstruktion, insbesondere Holzkonstruktion, möglich, besonders wenige solcher Verbindungsvorrichtungen einzusetzen, wobei an die Holzkonstruktion gestellte Anforderungen bezüglich Festigkeit, Schwingungsverhalten etc. vollständig erfüllbar sind. Ferner ist es mittels der erfindungsgemäßen Verbindungsvorrichtung möglich, die Holzkonstruktion besonders widerstandsfähig gegen Zug-, Druck- und/oder Scherbelastungen, insbesondere zyklisch wiederkehrende solcher Belastungen, auszubilden. Zu nennen ist hierbei beispielsweise eine Erdbebenbelastung, welche sich durch solche zyklisch wiederkehrende Beanspruchungen auf besonders hohem Niveau darstellt.

Um eine Übertragung von Schwingungen von dem ersten Bauteil zu dem zweiten Bauteil oder umgekehrt zumindest zu dämpfen oder idealerweise vollständig zu verhindern, ist zwischen dem ersten Schenkel und der Auflageplatte ein erstes Dämpfungselement aus einem Dämpfungsmaterial angeordnet. Das Dämpfungselement kann über eine dem ersten Schenkel zugewandte Fläche direkt an die Innenfläche des ersten Schenkels angrenzen. Über eine, dem ersten Schenkel abgewandte Fläche des Dämpfungselements kann dieses direkt mit der Auflageseite der Auflageplatte in Berührung stehen. Das bedeutet, dass direkt zwischen der Auflageplatte und der Innenfläche des ersten Schenkels jeweils unmittelbar das Dämpfungselement angeordnet sein kann. Hierdurch ist die Auflageplatte, welche über die Verbindungselemente mit dem ersten Bauteil verbunden ist, schwingungstechnisch von dem zweiten Bauteil entkoppelt, sodass Schwingungen des zweiten Bauteils nicht oder nur in besonders geringem Maße über die Auflageplatte und über die Verbindungselemente in das erste Bauteil eingeleitet werden.

Als besonders vorteilhaft hat es sich herausgestellt, dass ein jeweiliges Loch der Auflageplatte einen Führungsabschnitt zum axialen Führen eines Bolzenanteils des Verbindungselements aufweist. Das bedeutet, dass das Verbindungselement, welches beispielsweise als eine selbstschneidende Schraube ausgebildet sein kann, bei dessen Eintreiben in das erste Bauteil, entlang deren Längsachse geführt werden kann, sodass ein besonders positionsgenaues Einschrauben bzw. Eintreiben der Schraube in das erste Bauteil ermöglicht ist. Hierzu kann der Führungsabschnitt als eine kreiszylindrisch ausgebildete Innenumfangsfläche des jeweiligen Lochs ausgeführt sein, welche mit einer Außenumfangsfläche des Bolzenanteils korrespondiert. Beispielsweise kann dann der Bolzenanteil direkt an der Innenumfangsfläche, das heißt also direkt an dem Führungsabschnitt entlanggleiten, solange das Verbindungselement entlang dessen Längsachse bewegt wird.

Ferner hat es sich als vorteilhaft herausgestellt, wenn ein jeweiliges Loch der Auflageplatte eine Kopfaufnahme zum Aufnehmen eines Kopfanteils des Verbindungselements aufweist. Über die Kopfaufnahme ist der Kopfanteil des Verbindungselements bzw. der Schraube besonders positionsstabil in Bezug zu der Auflageplatte zu halten. Idealerweise entspricht eine Innenumfangsfläche der Kopfaufnahme zumindest bereichsweise eine Außenumfangsfläche des Kopfanteils, sodass der Kopfanteil des Verbindungselements zumindest im Wesentlichen formschlüssig in der Kopfaufnahme aufgenommen werden kann. Beispielsweise kann die Kopfaufnahme kreiskegelstumpfförmig ausgebildet sein, sodass ein ebenfalls kreiskegelstumpfförmig ausgebildeter Kopfanteil in der Kopfaufnahme formschlüssig zum Aufliegen kommt. Die Kopfaufnahme kann des Weiteren direkt an den Führungsschnitt angrenzen, das heißt, dass die Kopfaufnahme zusammen mit dem Führungsabschnitt des Lochs eine zumindest im Wesentlichen trichterförmige Struktur bildet. Daher ist die Kopfaufnahme auch dazu geeignet, das Verbindungselement besonders einfach in ein jeweiliges Loch einführen zu können. Die Kopfaufnahme und der Führungsabschnitt können miteinander einstückig ausgebildet sein und mit der Auflageplatte kraft-, form- und/oder stoffschlüssig verbunden sein. Es ist aber auch denkbar, dass der Führungsabschnitt, die Kopfaufnahme und die Auflageplatte miteinander einstückig ausgebildet sind. Bevorzugt ist die Auflageplatte quaderförmig ausgebildet und weist eine konstante Dicke auf, welche so dimensioniert ist, dass das jeweilige gesamte Loch, das heißt der Führungsabschnitt und die Kopfaufnahme, diese konstante Dicke durchdringt. Beispielsweise kann das Loch mitsamt dessen Führungsabschnitt und mitsamt dessen Kopfaufnahme in die Auflageplatte eingebohrt und/oder eingefräst sein.

In einer weiteren Ausführungsform der Erfindung ist vorgesehen, dass ein zwischen einer Durchdringungsachse des jeweiligen, schräg verlaufenden Lochs der Auflageplatte und dem ersten Schenkel gebildeter Winkel zwischen 30 Grad und 60 Grad, insbesondere 45 Grad beträgt. Hierdurch ist es auf besonders vorteilhafte Weise möglich, auftretende Kräfte, welche über die Verbindungsvorrichtung aufzunehmen sind, in zu den Bauteilen parallel verlaufende Anteile und zu den Bauteilen senkrecht verlaufende Anteile aufzuteilen. Insbesondere die Scherbelastung, die zwischen dem ersten Bauteil und der Verbindungsvorrichtung wirken kann, ist dementsprechend zumindest teilweise in eine Druckbelastung für eines der beiden gegenüberliegenden Verbindungselemente und/oder in eine Zugbelastung für das andere der beiden Verbindungselemente auf teilbar.

Als besonders vorteilhaft hat es sich gezeigt, wenn das erste Dämpfungselement mit dem ersten Schenkel und/oder mit der Auflageplatte verbunden ist. Das bedeutet, dass das Dämpfungselement mit dem ersten Schenkel verbunden sein kann. Alternativ oder zusätzlich kann das erste Dämpfungselement mit der Auflageplatte verbunden sein. Darunter ist zu verstehen, dass das Dämpfungselement mit dem ersten Schenkel und/oder der Auflageplatte kraft-, form- und/oder stoffschlüssig verbunden ist. Beispielsweise kann das erste Dämpfungselement mit dem ersten Schenkel und/oder mit der Auflageplatte verschraubt, verklebt, verschweißt oder anderweitig, zum Beispiel thermisch verbunden sein. Dies ist insofern vorteilhaft, als das Dämpfungselement positionsfest an dem ersten Schenkel gehalten ist, sodass das Dämpfungselement bei einem Handhaben der Verbindungsvorrichtung nicht von dem ersten Schenkel herabfällt. Ist des Weiteren das erste Dämpfungselement mit der Auflageplatte verbunden, so ist auch verhindert, dass die Auflageplatte von dem Dämpfungselement und infolgedessen von dem ersten Schenkel herabfällt. Dies ergibt eine besonders einfache Handhabbarkeit der Verbindungsvorrichtung.

Es ist weiter von besonderem Vorteil, wenn an einer der Innenseite des ersten Schenkels gegenüberliegenden Außenseite des ersten Schenkels ein zweites Dämpfungselement aus einem Dämpfungsmaterial angeordnet ist. Das bedeutet, dass das zweite Dämpfungselement zwischen dem ersten Bauteil und dem ersten Schenkel anordenbar ist, indem die Verbindungsvorrichtung mit dem ersten Bauteil verbindbar, zum Beispiel verschraubbar ist. Somit ist also das zweite Bauteil zwar direkt mit dem zweiten Schenkel der Verbindungsvorrichtung verbindbar, doch das erste Bauteil ist in vorteilhafter Weise nur noch indirekt mit dem ersten Schenkel der Verbindungsvorrichtung verbindbar. Denn eine direkte Berührung des ersten Schenkels mit dem ersten Bauteil ist verhinderbar, indem das zweite Dämpfungselement ein direktes Berühren des ersten Schenkels mit dem ersten Bauteil verhindert. Über das erste Dämpfungselement ist des Weiteren ein direkter Kontakt zwischen dem ersten Schenkel der Verbindungsvorrichtung und dem ersten Bauteil verhinderbar, da mittels des ersten Dämpfungselements eine direkte Berührung zwischen der Auflageplatte und dem ersten Schenkel verhinderbar ist.

Das zweite Dämpfungselement kann mit dem ersten Schenkel verbunden sein, sodass in vorteilhafter Weise verhindert ist, dass das zweite Dämpfungselement von dem ersten Schenkel herabfällt. Dies führt zu einer noch einfacher handhabbaren Verbindungsvorrichtung. Insbesondere ist es denkbar, dass die miteinander verbundenen Schenkel, die mit dem ersten Schenkel verbundenen Dämpfungselemente und die Auflageplatte zusammen die einteilige Verbindungsvorrichtung bilden.

Das Dämpfungsmaterial kann einen Kunststoff, insbesondere geschlossenzelliges Polyetherurethan aufweisen. Das bedeutet, dass das erste Dämpfungselement zumindest teilweise aus diesem Kunststoff, das bedeutet aus geschlossenzelligem Polyetherurethan hergestellt sein kann. Alternativ oder zusätzlich kann das zweite Dämpfungselement zumindest teilweise aus dem Kunststoff bzw. aus dem geschlossenzelligen Polyetherurethan hergestellt sein. Hieraus ergibt sich der Vorteil, dass die Dämpfungselemente jeweils besonders vorteilhafte Dämpfungseigenschaften aufweisen. Es ist also bei einem Einsatz von den Dämpfungselementen aus geschlossenzelligem Polyetherurethan möglich, das erste Bauteil und das zweite Bauteil relativ zueinander zumindest im Wesentlichen positionsfest zu halten. Gleichzeitig ist verhindert, dass Schwingungen von dem ersten Bauteil an das zweite Bauteil oder umgekehrt übertragen werden. Hierdurch ergibt sich, insbesondere wenn das erste Bauteil und das zweite Bauteil Teil einer Holzkonstruktion sind, die Teil eines Gebäudes ist bzw. wird, eine besonders vorteilhafte Bau- bzw. Gebäudeakustik.

Die Erfindung betrifft ferner eine Bauteilanordnung mit der im Vorhergehenden beschriebenen Verbindungsvorrichtung. Vorteile und vorteilhafte Ausgestaltungen der erfindungsgemäßen Verbindungsvorrichtung sind als Vorteile und vorteilhafte Ausgestaltungen der erfindungsgemäßen Bauteilanordnung anzusehen und umgekehrt.

Um also die schadensfreie Energiedissipation bei der auf die Holzkonstruktion wirkende Belastung zu gewährleisten, umfasst die Bauteilanordnung die Verbindungsvorrichtung. Des Weiteren weist die Bauteilanordnung das erste Bauteil und das zweite Bauteil sowie wenigstens zwei Verbindungselemente auf. Mittels der beiden Verbindungselemente sind der erste Schenkel und das erste Bauteil miteinander verbunden, indem die Verbindungselemente durch die schräg verlaufenden Löcher der Auflageplatte und die jeweils damit korrespondierenden Löcher des ersten Schenkels hindurch in das erste Bauteil eingetrieben sind. Hierbei fallen die Längsachse des jeweiligen Verbindungselements und die Durchdringungsachse des jeweiligen, schräg verlaufenden Lochs der Auflageplatte zumindest im Wesentlichen zusammen. Darüber hinaus umfasst die Bauteilanordnung ein weiteres Verbindungselement, mittels welchem der zweite Schenkel und das zweite Bauteil miteinander verbunden sind.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten Merkmale und Merkmalskombinationen sind dabei nicht nur in Alleinstellung sondern auch in Kombination untereinander verwendbar, ohne den Rahmen der Erfindung zu verlassen, der durch die Ansprüche definiert wird.

Die Zeichnung zeigt in:
- Fig. 1: eine perspektivische Ansicht einer Verbindungsvorrichtung zum Verbinden zweier Bauteile (Fig. 1a) und eine vergrößerte teilweise Ansicht der Verbindungsvorrichtung (Fig. 1b);
- Fig. 2: eine Vorderansicht der Verbindungsvorrichtung;
- Fig. 3: eine Vorderansicht einer Auflageplatte; und
- Fig. 4: eine Vorderansicht einer weiteren Ausführungsform der Auflageplatte.

In den Figuren werden gleiche oder funktionsgleiche Elemente mit den gleichen Bezugszeichen versehen.

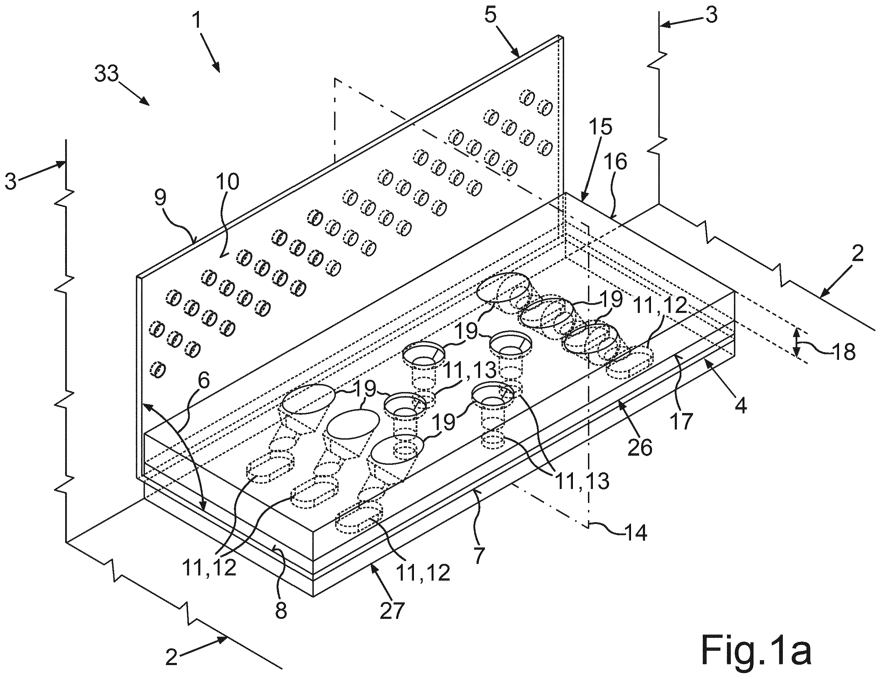

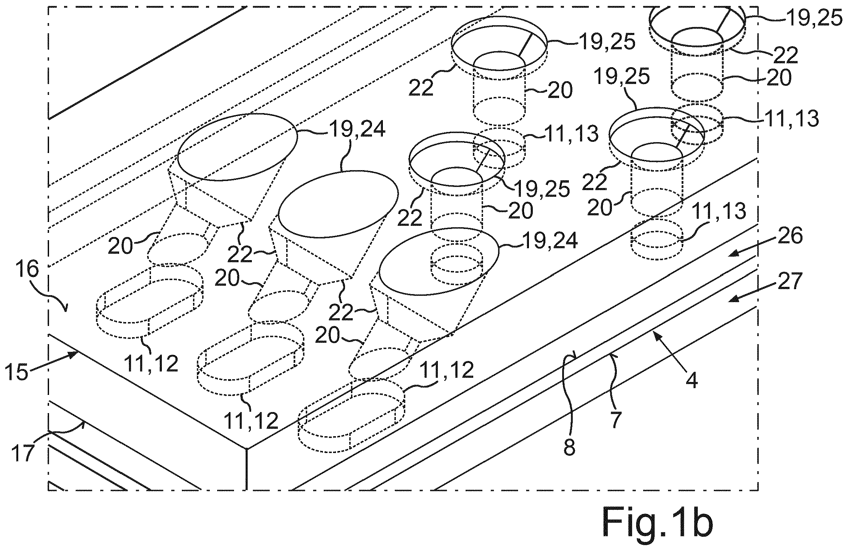

Fig. 1 zeigt in einer perspektivischen Ansicht eine Verbindungsvorrichtung 1 zum Verbinden eines ersten Bauteils 2 und eines zweiten Bauteils 3. Die Verbindungsvorrichtung 1 umfasst einen ersten Schenkel 4 und einen zweiten Schenkel 5. Die beiden Schenkel 4, 5 sind miteinander über eine jeweilige Längskante miteinander verbunden und schließen einen Winkel 6 ein. Der Winkel 6 kann zwischen 85 Grad und 95 Grad betragen. Der Winkle 6 kann - wie im vorliegenden Beispiel - 90 Grad betragen. Es ist aber genauso gut denkbar, dass der Winkel 6 zwischen 0 Grad und 180 Grad beträgt, sodass die Bauteile 2, 3 schräg zueinander anordenbar sind. Die beiden Schenkel 4, 5 können miteinander kraft-, form- und/oder stoffschlüssig verbunden sein. Beispielsweise können die Schenkel 4, 5 miteinander verklebt, verschweißt und/oder verschraubt etc. sein. Besonders bevorzugt ist es, wenn der erste Schenkel 4 und der zweite Schenkel 5 miteinander einstückig ausgebildet sind. Beispielsweise ist es denkbar, dass die beiden Schenkel 4, 5 aus einem zuvor ebenen Werkstück gebildet sind, indem die Schenkel 4, 5 zueinander hin gebogen sind.

Der erste Schenkel 4 weist eine, beispielsweise rechteckige, erste Außenfläche 7 auf, welche einer ersten, ebenfalls rechteckigen, Innenfläche 8 entgegengesetzt ist und von dieser über eine erste Schenkeldicke beabstandet ist, sodass sich für den ersten Schenkel 4 eine quaderartige Form ergibt. In analoger Weise weist der zweite Schenkel 5 eine rechteckige, zweite Außenfläche 9 auf, welche eine rechteckigen, zweiten Innenfläche 10 entgegengesetzt ist und davon über eine zweite Schenkeldicke beabstandet ist, sodass auch der zweite Schenkel 5 eine quaderartige Form innehat.

Der erste Schenkel 4 weist eine Vielzahl von Löchern 11 auf, die die gesamte erste Schenkeldicke senkrecht durchdringen. Ein jeweiliges Loch 11 ist also durch eine Materialausnehmung gebildet, welche beispielsweise mittels Bohrens, Fräsens, Stanzens, Sägens und/oder Laserschneidens etc. hergestellt sein kann. Hierbei steht eine jeweilige Innenumfangsfläche des jeweiligen Lochs 11 senkrecht zu dem ersten Schenkel 4. Im vorliegenden Beispiel weist der erste Schenkel 4 sechs Löcher 11 auf, welche jeweils als ein Langloch 12 ausgebildet sind. Darüber hinaus ist in Fig. 1 gezeigt, dass der dort beispielhaft gezeigte erste Schenkel 4 vier Löcher 11 aufweist, welche jeweils als ein kreisrundes Loch 13 ausgebildet sind. Hierbei sind die Löcher 11, also die Langlöcher 12 und die kreisrunden Löcher 13, derart positionell an dem Schenkel 4 angeordnet, dass diese eine Lochanordnung bilden, welche bezüglich einer imaginären Spiegelebene 14 spiegelbildlich ist. Die imaginäre Spiegelebene 14 verläuft senkrecht zu dem ersten Schenkel 4 und senkrecht zu dem zweiten Schenkel 5 und schneidet die Schenkel 4, 5 jeweils auf der Hälfte deren jeweiliger Längskanten.

Ferner ist in Fig. 1 eine Auflageplatte 15 gezeigt, welche eine Montageseite 16 aufweist, die einer Auflageseite 17 der Auflageplatte 15 entgegengesetzt ist und von dieser über eine Auflagenplattendicke 18 beabstandet ist. Die Auflageplatte 15 weist eine Vielzahl von Löchern 19 auf, welche derart die Auflageplatte 15 vollständig durchdringen, dass die Löcher 19 mit den Löchern 11 des ersten Schenkels korrespondieren. Das bedeutet, dass ein jeweiliges Loch 19 der Auflageplatte 15 mit jeweils einem Loch 11 des ersten Schenkels 4 korrespondiert.

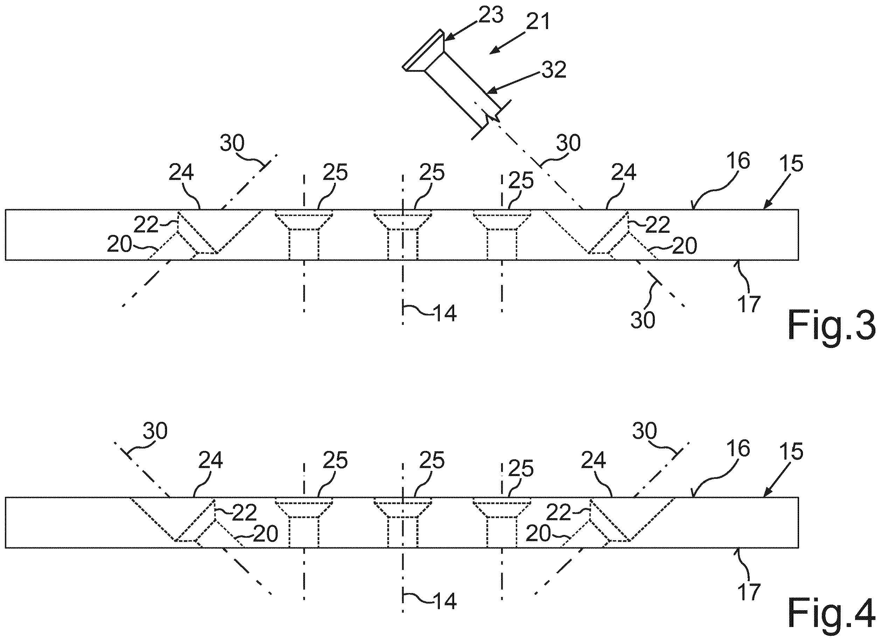

Die Löcher 19 der Auflageplatte 15 weisen jeweils einen Führungsabschnitt 20 auf, mittels welchem ein Verbindungselement 21 (erstmalig gezeigt in Fig. 3) entlang dessen axialer Richtung führbar ist. Beispielsweise kann ein Innendurchmesser des jeweiligen Führungsabschnitts 20 mit einem Außendurchmesser des Verbindungselements 21 zumindest im Wesentlichen korrespondieren, sodass eine Außenumfangsfläche des Verbindungselements 21 bei einem Hindurchbewegen desselben durch das jeweilige Loch 19 an einer Innenumfangsfläche des Führungsabschnitts 20 entlanggleitet.

Ferner kann das jeweilige Loch 19 der Auflageplatte 15 eine Kopfaufnahme 22 aufweisen, in welchem ein Kopfanteil 23 (siehe Fig. 3) aufnehmbar ist, indem eine Form der Kopfaufnahme 22 mit einer Form des Kopfanteils 23 zumindest im Wesentlichen korrespondiert. Im vorliegenden Beispiel weist die Kopfaufnahme 22 eine kreiskegelstumpfförmige Form auf, sodass der ebenfalls kreiskegelstumpfförmig ausgebildete Kopfanteil 23 des Verbindungselements 21 zumindest im Wesentlichen formschlüssig in der Kopfaufnahme 22 daran zum Anliegen kommen kann.

In Fig. 1 ist zu erkennen, dass beispielhaft sechs der Löcher 19 jeweils als ein schräg verlaufendes Loch 24 ausgebildet sind, wobei drei der sechs schräg verlaufenden Löcher 24 auf einer Seite der Spiegelebene 14 und drei andere der sechs schräg verlaufenden Löcher 24 auf einer anderen Seite der Spiegelebene 14 angeordnet sind. Mit anderen Worten sind im vorliegenden Beispiel jeweils zwei Löcher bezüglich der Spiegelebene 14 spiegelbildlich zueinander angeordnet. Die schräg verlaufenden Löcher 24 haben den Zweck, dass das Verbindungselement 21 bezüglich des ersten Schenkels 4 schräg in das erste Bauteil 2 einschraubbar ist, sodass eine zwischen dem ersten Schenkel 4 und dem ersten Bauteil 2 wirkende Scherbelastung zumindest teilweise in Form einer Zug- und/oder Druckbelastung über die in den schräg verlaufenden Löchern 24 angeordneten Verbindungselemente 21 aufgenommen werden kann.

Ferner weist die Auflageplatte 15 im vorliegenden Beispiel vier senkrecht verlaufende Löcher 25 auf, welche ebenfalls dazu geeignet sind, ein Verbindungselement, beispielsweise eines der Verbindungselemente 21, aufzunehmen, um die Auflageplatte 15 in senkrechter Richtung durch den ersten Schenkel 4 hindurch bzw. durch ein jeweiliges kreisrundes Loch 13 des ersten Schenkels 4 hindurch mit dem ersten Bauteil 2 zu verbinden. Hierdurch ist gewährleistet, dass auch eine parallel zu dem zweiten Schenkel 5 wirkende Zugbelastung über die Auflageplatte 15 im Zusammenspiel mit dem ersten Schenkel 4 über in den kreisrunden Löchern 13 angeordnete Verbindungselemente 21 aufgenommen werden kann.

Zwischen der Auflageplatte 15 und dem ersten Schenkel 4 ist ein erstes Dämpfungselement 26 aus einem Dämpfungsmaterial angeordnet, wobei das Dämpfungsmaterial Kunststoff aufweisen kann. Es ist aber genauso gut denkbar, dass das Dämpfungsmaterial vollständig aus dem Kunststoff gebildet ist. Das bedeutet also, dass das Dämpfungselement 26 ganz oder teilweise aus geschlossenzelligem Polyetherurethan hergestellt sein kann. Dies ist insofern vorteilhaft, als das Dämpfungselement 26 besonders vorteilhafte Eigenschaften bezüglich einer Schwingungsdämpfung aufweist. Die zu dämpfende Schwingung kann beispielsweise von einem weiteren Bauteil an das zweite Bauteil 3 übertragen werden, jedoch wird diese Schwingung behindert, an das erste Bauteil 2 übertragen zu werden, da die Verbindungselemente 21 nicht mit dem ersten Schenkel 4, sondern lediglich mit der Auflageplatte 15 in direktem Kontakt stehen. Anders ausgedrückt sind die Verbindungselemente 21 von dem ersten Schenkel 4 schwingungstechnisch idealerweise vollständig entkoppelt, indem zwischen dem ersten Schenkel 4 und der Auflageplatte 15 das erste Dämpfungselement 26 angeordnet ist. Dies führt dazu, dass die zu dämpfende Schwingung in geringerem Maße von dem zweiten Bauteil 3 an das erste Bauteil 2 oder umgekehrt übertragen wird, als wenn die Auflageplatte 15 mit dem ersten Schenkel 4 in einem direkten Kontakt stünde.

Es ist ein zweites Dämpfungselement 27 aus einem Dämpfungsmaterial vorgesehen, welches an der Außenfläche 7 des ersten Schenkels 4 angeordnet ist. Mit anderen Worten ist das Dämpfungselement 27 zwischen dem ersten Bauteil 2 und dem ersten Schenkel 4 angeordnet. Hierbei kann das Dämpfungselement 27 aus dem gleichen Dämpfungsmaterial hergestellt sein, wie das erste Dämpfungselement 26. Aufgrund der bereits beschriebenen vorteilhaften Eigenschaften des Dämpfungsmaterials bezüglich der Schwingungsdämpfung ist der erste Schenkel 4 weiter von dem ersten Bauteil 2 schwingungstechnisch entkoppelt. Im vorliegenden Beispiel ist der erste Schenkel 4 zumindest im Wesentlichen vollständig schwingungstechnisch von dem ersten Bauteil 2 entkoppelt. Die auf das zweite Bauteil 3 wirkende Schwingung, ist somit über das erste Dämpfungselement 26 und/oder das zweite Dämpfungselement 27 zumindest im Wesentlichen vollständig daran gehindert, an das erste Bauteil 2 übertragen zu werden. Insbesondere wenn die Verbindungsvorrichtung 1 beim Bau von einem Gebäude zum Einsatz kommt, ergibt sich hierdurch eine besonders vorteilhafte Gebäudeakustik. Beispielsweise lässt sich über die Verbindungsvorrichtung 1 zumindest im Wesentlichen vollständig verhindern, dass ein Trittschall aus einem Stockwerk des Gebäudes über eine Holzkonstruktion des Gebäudes in ein anderes Stockwerk des Gebäudes übertragen wird.

Das erste Dämpfungselement 26 und/oder das zweite Dämpfungselement 27 kann/können mit dem ersten Schenkel 4 verbunden sein. Das bedeutet, dass das erste Dämpfungselement 26 zum Beispiel an der Innenfläche 8 des ersten Schenkels 4 angeklebt sein kann. Es ist aber genauso gut denkbar, dass das erste Dämpfungselement 26 mittels eines thermischen Verfahrens mit dem ersten Schenkel 4 verbunden ist. Hierdurch ergibt sich eine besonders innige Verbindung zwischen dem Dämpfungselement 26 und dem Schenkel 4, sodass gewährleistet ist, dass das Dämpfungselement 26 nicht von dem ersten Schenkel 4 herabfällt. Ferner kann das erste Dämpfungselement 26 auf analoge Weise mit der Auflageplatte 15 verbunden sein. Daher ist die Verbindungsvorrichtung 1 besonders einfach handhabbar, da die Auflageplatte 15 nicht von dem ersten Schenkel 4 herabfallen kann. Alternativ oder zusätzlich kann dementsprechend das zweite Dämpfungselement 27 an der Außenfläche 7 des ersten Schenkels 4 angeklebt oder auf andere Art und Weise, zum Beispiel mittels eines thermischen Verfahrens, mit dem ersten Schenkel 4 verbunden sein.

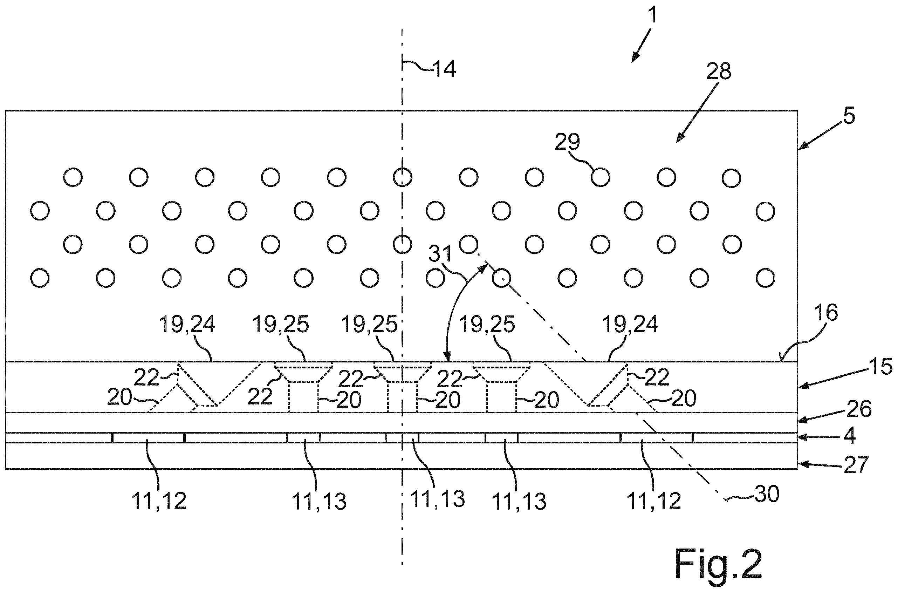

Die Auflageplatte 15 sowie die Löcher 19 der Auflageplatte 15 sind im Folgenden in Zusammenhang mit Fig. 2 näher beschrieben. Hierzu zeigt die Fig. 2 eine Vorderansicht der Verbindungsvorrichtung 1. Es ist zu erkennen, dass die imaginäre Spiegelebene 14 die Verbindungsvorrichtung 1 vorliegend in 2 spiegelbildliche Hälften unterteilt. Das bedeutet, dass die Verbindungsvorrichtung 1 in Bezug zu der imaginären Spiegelebene 14 spiegelsymmetrisch aufgebaut ist. Ferner ist zu erkennen, dass jeweils die Löcher 19 der Auflageplatte 15 sowie jeweils die Löcher 11 des ersten Schenkels 4 in Bezug auf die imaginäre Spiegelebene 14 spiegelbildlich bzw. spiegelsymmetrisch zueinander angeordnet sind. Ferner ist zu erkennen, dass der zweite Schenkel 5 ein weiteres Verbindungselement 28 aufweist, welches im vorliegenden Beispiel als eine Vielzahl von Löchern 29 ausgebildet ist. Das bedeutet, dass der zweite Schenkel 5 mit dem zweiten Bauteil 3 verbindbar ist, indem beispielsweise durch zumindest eines der Löcher 29 hindurch zum Beispiel ein Nagel in das zweite Bauteil 3 eingetrieben, zum Beispiel eingeschlagen wird.

Jedes der Löcher 19 weist eine Durchdringungsachse auf, wobei eine jeweilige Durchdringungsachse und eine jeweilige Längsmittenachse des jeweiligen Lochs 19 miteinander zusammenfallen. Die jeweilige Durchdringungsachse eines senkrechten Lochs 25 verläuft senkrecht zu dem ersten Schenkel 4 und parallel zu dem zweiten Schenkel 5. Eine Durchdringungsachse 30 eines schräg verlaufenden Lochs 24 verläuft schräg zu dem ersten Schenkel 4 und parallel zu dem zweiten Schenkel 5. Um auf besonders vorteilhafte Weise die zwischen dem ersten Schenkel 4 und dem ersten Bauteil 2 wirkende Scherbelastung zumindest im Wesentlichen vollständig in eine Zug- und/oder Druckbelastung für in den schräg verlaufenden Löchern 24 angeordnete Verbindungselemente 21 umwandeln zu können, ist beispielhaft vorgesehen, dass zwischen der Durchdringungsachse 30 des jeweiligen schräg verlaufenden Lochs 24 der Auflageplatte 15 und dem ersten Schenkel 4 ein Winkel 31 gebildet ist. Beispielsweise kann dieser Winkel 31 zwischen der Innenfläche 8 des ersten Schenkels 4 und der Durchdringungsachse 30 eingeschlossen sein. Insbesondere kann der Winkel 31 zwischen 30 Grad und 60 Grad betragen. Der Winkel 31 beträgt vorliegend beispielhaft 45 Grad.

Es ist zu verstehen, dass ein Verbindungselement 21, welches - ausgehend von der Montageseite 16 hin zu dem ersten Bauteil 2 und in dieses hinein - in eines der senkrecht verlaufenden Löcher 25 eingeführt wird, zunächst durch die Auflagenplattendicke 18 hindurchbewegt wird, wobei eine Längsmittenachse des Verbindungselements 21 mit der Durchdringungsachse des senkrechten Lochs 25 zusammenfällt, da das Verbindungselement 21 mittels des Führungsabschnitts 20 über einen Bolzenanteil 32 des Verbindungselements 21 in axialer Richtung geführt ist. Bei einem weiteren Bewegen des Verbindungselements 21 hin zu dem ersten Bauteil 2 durchstößt das Verbindungselement 21 das erste Dämpfungselement 26, beispielsweise indem ein selbstschneidendes Gewinde des Verbindungselements 21 das erste Dämpfungselement 26 durchschneidet. Es kann aber auch ein mit dem senkrecht verlaufenden Loch 25 korrespondierendes Loch in dem Dämpfungselement 26 vorgesehen sein, welches koaxial zu dem senkrecht verlaufenden Loch 25 angeordnet ist, sodass das Verbindungselement 21 durch dieses hindurchbewegt werden kann.

Bei einem weiteren Hindurchbewegen des Verbindungselements 21 durch das senkrecht verlaufende Loch 25 hin zu dem ersten Bauteil 2 wird das Verbindungselement 21 durch das kreisrunde Loch 13 des ersten Schenkels 4 hindurchbewegt, wobei das kreisrunde Loch 13 koaxial zu dem senkrecht verlaufenden Loch 25 der Auflageplatte angeordnet ist. Im weiteren Verlauf ist dann das zweite Dämpfungselement 27 mittels des Verbindungselements 21 zu durchdringen. Dies kann in analoger Weise wie bei dem Dämpfungselement 26 geschehen.

Um schließlich die Verbindungsvorrichtung 1 über dessen ersten Schenkel 4 fest mit dem ersten Bauteil 2 zu verbinden, ist das Verbindungselement 21 in das erste Bauteil 2 einzutreiben. Wenn es sich bei dem Verbindungselement 21 um eine selbstschneidende Schraube handelt, ist diese Schraube dementsprechend in das erste Bauteil 2 einzuschrauben.

Wird ein anderes Verbindungselement 21 - ausgehend von der Montageseite 16 hin zu dem ersten Bauteil 2 und in dieses hinein - in eines der schräg verlaufenden Löcher 24 eingeführt, wird das Verbindungselement 21 ebenfalls zunächst durch die Auflagenplattendicke 18 hindurchbewegt, wobei eine Längsmittenachse des Verbindungselements 21 mit der Durchdringungsachse 30 des schräg verlaufenden Lochs 24 zusammenfällt. Hierbei ist das Verbindungselement 21 mittels des Führungsabschnitts 20 über den Bolzenanteil 32 des Verbindungselements 21 in axialer Richtung geführt. Wie zuvor beschrieben, durchstößt dann das Verbindungselement 21 das erste Dämpfungselement 26 um in weiterer Folge durch das Langloch 12 des ersten Schenkels 4 hindurchgeführt zu werden. Hierbei ist das Langloch 12 derart an dem ersten Schenkel 4 positioniert, dass das Verbindungselement 21 ungehindert durch das schräge Loch 24 hindurchbewegt wird und auf das zweite Dämpfungselement 27 trifft, welches in analoger Weise, wie im Zusammenhang mit dem Dämpfungselement 26 beschrieben, von dem Verbindungselement 21 durchstoßen wird. Das Verbindungselement 21, welches bereichsweise in dem schräg verlaufenden Loch 24 angeordnet ist, ist dann wie zuvor beschrieben mit dem zweiten Bauteil 2 zu verbinden, beispielsweise indem das als die selbstschneidende Schraube ausgebildete Verbindungselement 21 in das erste Bauteil 2 eingeschraubt wird.

Fig. 3 zeigt eine Vorderansicht der Auflageplatte 15. Bei einer in Fig. 3 gezeigten Ausbildungsform der Auflageplatte 15 ist zu erkennen, dass die zumindest zwei spiegelbildlich zueinander angeordneten, schräg verlaufenden Löcher 24 so zueinander angeordnet sind, dass deren jeweilige Kopfaufnahme 22 einander zugewandt sind. Das bedeutet, dass ein jeweiliger Führungsabschnitt 20 der beiden spiegelbildlich zueinander angeordneten, schräg verlaufenden Löcher 24 voneinander abgewandt sind. Mit anderen Worten schneiden sich die jeweiligen Durchdringungsachsen 30 oberhalb der Montageseite 16.

Fig. 4 zeigt eine Vorderansicht einer weiteren Ausführungsform der Auflageplatte 15, wobei die zumindest zwei spiegelbildlich zueinander angeordneten, schräg verlaufenden Löcher 24 so zueinander angeordnet sind, dass deren jeweilige Kopfaufnahme 22 voneinander abgewandt sind. Das bedeutet, dass ein jeweiliger Führungsabschnitt 20 der beiden spiegelbildlich zueinander angeordneten, schräg verlaufenden Löcher 24 einander zugewandt sind. Mit anderen Worten schneiden sich die jeweiligen Durchdringungsachsen 30 unterhalb der Auflageseite 17.

Entsprechend der Ausrichtung der hier gezeigten, schräg verlaufenden Löcher 24 ist eine Form oder eine Lage oder sind die Form und die Lage des mit dem jeweiligen schräg verlaufenden Loch 25 korrespondierenden Langlochs 12 so gewählt, dass das Verbindungselement 21 durch das schräg verlaufende Loch 24 hindurch und durch das korrespondierende Langloch 12 hindurch in Richtung zu dem ersten Bauteil 2 hin und in dieses hineinbewegt werden kann.

Fig. 1a zeigt des Weiteren eine Bauteilanordnung 33, wobei aus Übersichtsgründen die Verbindungselemente 21 nicht dargestellt sind.

### Bezugszeichenliste

- 1: Verbindungsvorrichtung
- 2: Bauteil
- 3: Bauteil
- 4: Schenkel
- 5: Schenkel
- 6: Winkel
- 7: Außenfläche
- 8: Innenfläche
- 9: Außenfläche
- 10: Innenfläche
- 11: Loch
- 12: Langloch
- 13: kreisrundes Loch
- 14: Spiegelebene
- 15: Auflageplatte
- 16: Montageseite
- 17: Auflageseite
- 18: Auflagenplattendicke
- 19: Loch
- 20: Führungsabschnitt
- 21: Verbindungselement
- 22: Kopfaufnahme
- 23: Kopfanteil
- 24: schräg verlaufendes Loch
- 25: senkrecht verlaufendes Loch
- 26: Dämpfungselement
- 27: Dämpfungselement
- 28: weiteres Verbindungselement
- 29: Löcher
- 30: Durchdringungsachse
- 31: Winkel
- 32: Bolzenanteil
- 33: Bauteilanordnung

## Patentansprüche

1. Verbindungsvorrichtung (1) zum Verbinden zweier Bauteile (2, 3), mit einem ersten Schenkel (4), der mit einem ersten der beiden Bauteile (2) verbindbar ist, indem je ein Verbindungselement (21) durch je eines von den ersten Schenkel (4) durchdringenden Löchern (11) hindurch in das erste Bauteil (2) eintreibbar ist, und mit einem in einem Winkel (6) zu dem ersten Schenkel (4) angeordneten, zweiten Schenkel (5), der mittels eines weiteren Verbindungselements (28) mit einem zweiten der beiden Bauteile (3) verbindbar ist, und mit einer Auflageplatte (15), deren Auflageseite (17) einer Innenfläche (8) des ersten Schenkels (4) zugewandt ist und deren Montageseite (16) von dieser Innenfläche (8) abgewandt ist, wobei die Auflageplatte (15) Löcher (19) aufweist, die jeweils die Auflageplatte (15) vollständig durchdringen und die mit den Löchern (11) des ersten Schenkels (4) korrespondieren, sodass das jeweilige Verbindungselement (21) durch das eine der Löcher (11) des ersten Schenkels (4) und das jeweilige, damit korrespondierende Loch (19) der Auflageplatte (15) hindurchtreibbar ist, wobei zwischen dem ersten Schenkel (4) und der Auflageplatte (15) ein erstes Dämpfungselement (26) aus einem Dämpfungsmaterial angeordnet ist,
**dadurch gekennzeichnet, dass**
zumindest zwei der Löcher (19, 24) der Auflageplatte (15) in Bezug zu dem ersten Schenkel (4) schräg und in Bezug zu dem zweiten Schenkel (5) parallel und bezüglich einer Spiegelebene (14), die senkrecht zu dem ersten Schenkel (4) und zu dem zweiten Schenkel (5) steht, spiegelbildlich zueinander verlaufen.

2. Verbindungsvorrichtung (1) nach Anspruch 1,
**dadurch gekennzeichnet, dass**
ein jeweiliges Loch (19) der Auflageplatte (15) einen Führungsabschnitt (20) zum axialen Führen eines Bolzenanteils (32) des Verbindungselements (21) aufweist.

3. Verbindungsvorrichtung (1) nach Anspruch 1 oder 2,
**dadurch gekennzeichnet, dass**
ein jeweiliges Loch (19) der Auflageplatte (15) eine Kopfaufnahme (22) zum Aufnehmen eines Kopfanteils (23) des Verbindungselements (21) aufweist.

4. Verbindungsvorrichtung (1) nach einem der vorhergehenden Ansprüche,
**dadurch gekennzeichnet, dass**
ein zwischen einer Durchdringungsachse (30) des jeweiligen, schräg verlaufenden Lochs (19, 24) der Auflageplatte (15) und dem ersten Schenkel (4) gebildeter Winkel (31) zwischen 30 Grad und 60 Grad, insbesondere 45 Grad beträgt.

5. Verbindungsvorrichtung (1) nach einem der vorhergehenden Ansprüche,
**dadurch gekennzeichnet, dass**
das erste Dämpfungselement (26) mit dem ersten Schenkel (4) und/oder mit der Auflageplatte (15) verbunden ist.

6. Verbindungsvorrichtung (1) nach einem der vorhergehenden Ansprüche,
**dadurch gekennzeichnet, dass**
an einer der Innenfläche (8) des ersten Schenkels (4) gegenüberliegenden Außenseite (7) des ersten Schenkels (4) ein zweites Dämpfungselement (27) aus einem Dämpfungsmaterial angeordnet ist.

7. Verbindungsvorrichtung (1) nach Anspruch 6,
**dadurch gekennzeichnet, dass**
das zweite Dämpfungselement (27) mit dem ersten Schenkel (4) verbunden ist.

8. Verbindungsvorrichtung (1) nach einem der vorhergehenden Ansprüche,
**dadurch gekennzeichnet, dass**
das Dämpfungsmaterial einen Kunststoff, insbesondere geschlossenzelliges Polyetherurethan, aufweist.

9. Bauteilanordnung (33) mit einer nach einem der vorhergehenden Ansprüche ausgebildeten Verbindungsvorrichtung (1), dem ersten Bauteil (2), dem zweiten Bauteil (3) und mit wenigstens zwei Verbindungselementen (21), mittels welchen der erste Schenkel (4) und das erste Bauteil (2) miteinander verbunden sind, indem die Verbindungselemente (21) durch die schräg verlaufenden Löcher (24) der Auflageplatte (15) und die jeweils damit korrespondierenden Löcher (12) des ersten Schenkels (4) hindurch in das erste Bauteil (2) eingetrieben sind, wobei eine Längsachse des jeweiligen Verbindungselements (21) und eine Durchdringungsachse (30) des jeweiligen, schräg verlaufenden Lochs (24) der Auflageplatte (15) zumindest im Wesentlichen zusammenfallen, und einem weiteren Verbindungselement (28), mittels welchem der zweite Schenkel (5) und das zweite Bauteil (3) miteinander verbunden sind.

## Claims

1. A connecting device (1) for connecting two components (2, 3), including a first leg (4) connectable to a first one of the two components (2) in that each one connecting element (21) can be urged into the first component (2) through each one of holes (11) penetrating the first leg (4), and including a second leg (5) arranged at an angle (6) to the first leg (4), which is connectable to a second one of the two components (3) by means of a further connecting element (28), and including a support plate (15), the support side (17) of which faces an inner surface (8) of the first leg (4) and the mounting side (16) of which faces away from this inner surface (8), wherein the support plate (15) comprises holes (19), which each completely penetrate the support plate (15) and which correspond to the holes (11) of the first leg (4) such that the respective connecting element (21) can be urged through the one of the holes (11) of the first leg (4) and the respective hole (19) of the support plate (15) corresponding thereto, wherein a first damping element (26) of a damping material is arranged between the first leg (4) and the support plate (15),
**characterized in that**
at least two of the holes (19, 24) of the support plate (15) extend obliquely with respect to the first leg (4) and parallel with respect to the second leg (5) and mirror-imaged to each other with respect to a mirror plane (14), which is perpendicular to the first leg (4) and to the second leg (5).

2. The connecting device (1) according to claim 1,
**characterized in that**
a respective hole (19) of the support plate (15) comprises a guide section (20) for axially guiding a bolt portion (32) of the connecting element (21).

3. The connecting device (1) according to claim 1 or 2,
**characterized in that**
a respective hole (19) of the support plate (15) comprises a head receptacle (22) for receiving a head portion (23) of the connecting element (21).

4. The connecting device (1) according to any one of the preceding claims,
**characterized in that**
an angle (31) formed between a penetration axis (30) of the respective, obliquely extending hole (19, 24) of the support plate (15) and the first leg (4) is between 30 degrees and 60 degrees, in particular 45 degrees.

5. The connecting device (1) according to any one of the preceding claims,
**characterized in that**
the first damping element (26) is connected to the first leg (4) and/or to the support plate (15).

6. The connecting device (1) according to any one of the preceding claims,
**characterized in that**
a second damping element (27) of a damping material is arranged on an outer side (7) of the first leg (4) opposing the inner surface (8) of the first leg (4).

7. The connecting device (1) according to claim 6,
**characterized in that**
the second damping element (27) is connected to the first leg (4).

8. The connecting device (1) according to any one of the preceding claims,
**characterized in that**
the damping material comprises a plastic, in particular closed-cell polyurethane.

9. A component assembly (33) including a connecting device (1) formed according to any one of the preceding claims, the first component (2), the second component (3) and including at least two connecting elements (21), by means of which the first leg (4) and the first component (2) are connected to each other in that the connecting elements (21) are urged into the first component (2) through the obliquely extending holes (24) of the support plate (15) and the holes (12) of the first leg (4) respectively corresponding thereto, wherein a longitudinal axis of the respective connecting element (21) and a penetration axis (30) of the respective, obliquely extending hole (24) of the support plate (15) are at least substantially coinciding, and a further connecting element (28), by means of which the second leg (5) and the second component (3) are connected to each other.

## Revendications

1. Dispositif de raccordement (1) permettant de raccorder deux composants (2, 3), avec une première branche (4) pouvant être raccordée à un premier des deux composants (2), en faisant en sorte qu'un élément de raccordement (21) chacun puisse être enfoncé dans le premier composant (2) à travers un chacun des trous (11) pénétrant la première branche (4), et avec une seconde branche (5) disposée en angle (6) par rapport à la première branche (4) pouvant être raccordée à un second des deux composants (3) au moyen d'un autre élément de raccordement (28), et avec une plaque de support (15) dont le côté support (17) faisant face à une surface interne (8) de la première branche (4) et dont le côté de montage (16) étant orienté vers l'opposé de ladite surface interne (8), la plaque de support (15) comportant des trous (19) pénétrant complètement la plaque de support (15) et correspondant avec les trous (11) de la première branche (4) de sorte que l'élément de raccordement (21) respectif est enfonçable à travers l'un des trous (11) de la première branche (4) et le trou (19) correspondant de la plaque de support (15), un premier élément amortisseur (26) en matériau amortisseur étant disposé entre la première branche (4) et la plaque de support (15),
**caractérisé en ce**
**qu'**au moins deux des trous (19, 24) de la plaque de support (15) sont obliques par rapport à la première branche (4) et parallèle par rapport à la seconde branche (5) et s'étendent symétriquement l'une à l'autre par rapport à un plan de symétrie (14) qui est perpendiculaire à la première branche (4) et à la seconde branche (5).

2. Dispositif de raccordement (1) selon la revendication 1,
**caractérisé en ce**
**qu'**un trou respectif (19) de la plaque de support (15) comprend une partie de guidage (20) servant à guider axialement une partie de boulon (32) de l'élément de raccordement (21).

3. Dispositif de raccordement (1) selon la revendication 1 ou 2,
**caractérisé en ce**
**qu'**un trou respectif (19) de la plaque de support (15) comprend un logement de tête (22) pour loger une partie de tête (23) de l'élément de raccordement (21).

4. Dispositif de raccordement (1) selon l'une quelconque des revendications précédentes, **caractérisé en ce**
**qu'**un angle (31) formé entre un axe de pénétration (30) du trou respectif oblique (19, 24) de la plaque de support (15) et la première branche (4) est entre 30 degré et 60 degré, notamment 45 degré.

5. Dispositif de raccordement (1) selon l'une quelconque des revendications précédentes,
**caractérisé en ce que**
le premier élément amortisseur (26) est raccordé à la première branche (4) et/ou à la plaque de support (15).

6. Dispositif de raccordement (1) selon l'une quelconque des revendications précédentes,
**caractérisé en ce**
**qu'**un second élément amortisseur (27) en matériau amortisseur est disposé à un côté externe (7) de la première branche (4) opposé à la surface interne (8) de la première branche (4).

7. Dispositif de raccordement (1) selon la revendication 6,
**caractérisé en ce que**
le second élément amortisseur (27) est raccordé à la première branche (4).

8. Dispositif de raccordement (1) selon l'une quelconque des revendications précédentes,
**caractérisé en ce que**
le matériau amortisseur comprend une matière plastique, surtout un polyéther uréthane à cellules fermées.

9. Agencement de composants (33) avec un dispositif de raccordement (1) selon l'une quelconque des revendications précédentes, le premier composant (2), le second composant (3) et avec au moins deux éléments de raccordement (21) au moyen desquels la première branche (4) et le premier composant (2) sont reliés entre eux en faisant en sorte que les éléments de raccordement (21) à travers les trous obliques (24) de la plaque de support (15) et les trous correspondants (12) de la première branche (4) sont enfoncés dans le premier composant (2), un axe longitudinal de l'élément de raccordement (21) respectif et un axe de pénétration (30) du trou oblique respectif (24) de la plaque de support (15) coïncidant au moins sensiblement, et un autre élément de raccordement (28) au moyen duquel la seconde branche (5) et le second composant (3) sont reliés entre eux.
